# EUROPEAN PATENT APPLICATION

(11) **EP 1 092 470 A1**
(43) Date of publication of application: **18.04.2001**
(21) Application number: 00203133.4
(22) Date of filing: 08.09.2000
(51) Int. Cl.: B01J 2/14, B01J 2/00, B22F 1/00

(54) **Sintering of powder particles into granules**

(30) Priority: 11.10.1999 GB 9923954
(71) Applicant: Foseco International Limited, Swindon, Wiltshire SN3 1RE (GB)
(72) Inventor: Trinkl, Gerd, 46325 Borken (DE); Jaunich, Helmut, 46348 Raesfeld (DE); Ansorge, Andreas, 46325 Borken (DE); Bandyszak, Raimund, 47178 Duisburg (DE)
(74) Representative: Clayton-Hathway, Anthony Nicholas

(57) **Abstract**

A process of sintering powder particles (3) into granules, comprising:
(a) providing a laser (7) to emit a beam (9) of electromagnetic radiation to heat the powder particles;
(b) providing a supply of powder particles (3) to be sintered; and
(c) causing relative movement between the powder particles and the laser beam such that each particle is subjected to heating by the laser beam for a predetermined duration and the heated particles are thereby sintered to form a plurality of granules.

## Description

The present invention relates to the sintering of powder particles to form larger granules. The invention has particular utility in the metallurgical industry, for example for sintering particles of inoculant or flux or other metallurgical additives, but the invention has general utility, e.g. for sintering metallic, semi-metallic, ceramic, cermet, or other inorganic particles.

There are several known methods for agglomerating solid particles into larger granules, including using liquid binding agents to bind the particles together, or sintering the particles under heat. The use of binding agents can be disadvantageous because drying of the granules subsequent to agglomeration is generally necessary, and this can be time-consuming. Furthermore, the presence of the binding agent in the agglomerated granules may be undesirable, for example if the granules are to be added to another substance (e.g. a metallurgical melt), since the binding agent may cause unwanted contamination. In this respect, sintering of the particles to form larger granules may be preferable, but there are also problems with conventional sintering techniques. In particular, with sintering there may be insufficient control over the size of the granules formed, for example a very wide range of granule sizes may be produced. Another problem Which frequently occurs with conventional sintering techniques, is that the particles may fuse to the wall of the kiln or other vessel in which the sintering takes place. This problem is particularly prevalent in rotary kiln sintering, for example.

Japanese patent application 2-284640 discloses the sintering of fine ceramic powders in a fluidised bed furnace which is heated by means of a CO₂ laser.

According to a first aspect, the present invention provides a process of sintering powder particles into granules, comprising:
(a) providing a laser to emit a beam of electromagnetic radiation to heat the powder particles;
(b) providing a supply of powder particles to be sintered; and
(c) causing relative movement between the powder particles and the laser beam such that each particle is subjected to heating by the laser beam for a predetermined duration and the heated particles are thereby sintered to form a plurality of granules.

According to a second aspect, the invention provides a method of combining two or more different solid materials, comprising providing a mixture of powder particles of two or more different materials, and sintering the powder particles into granules in accordance with the first aspect of the invention such that the granules each comprise a combination of the different materials. Preferably at least one of the materials is a metal, and the method according to this aspect of the invention preferably comprises a method of making an alloy.

According to a third aspect, the invention provides a plurality of granules produced by the process according to the first aspect of the invention or the method according to the second aspect of the invention.

According to a fourth aspect, the invention provides an apparatus for sintering powder particles into granules, comprising:
(a) a laser to emit a beam of electromagnetic radiation to heat the particles;
(b) a support body to support the powder particles as they are heated by the laser beam; and
(c) means for causing relative movement between the powder particles and the laser beam such that each particle may be subjected to heating by the laser beam for a predetermined duration and the heated particles may thereby be sintered to form a plurality of granules.

The particles are sintered to form a plurality of larger granules. The powder particles may, for example, have a maximum diameter (or other maximum dimension) of a fraction of a millimetre, and the granules formed by the sintering of the powder particles may have a maximum diameter (or other maximum dimension) of a larger fraction of a millimetre, or of one or more millimetres. For example, in a preferred embodiment of the invention, the particles comprise so-called "fines" of an inoculant (e.g. ferrosilicon), the largest of which have a maximum dimension of approximately 0.3 mm (with many of the fines being significantly smaller than this). After sintering, the smallest granules which are formed preferably have a minimum dimension of approximately at least 0.2 mm, and the largest granules preferably have a maximum domension of approximately 0.7 mm. In an alternative embodiment, the granules have a size range of approximately 2.0 - 6.0 mm, for example. Other sizes of particle may, of course, be used, and the sizes of the granules produced may be larger or smaller than those of this example.

In the context of this specification, the term "laser" includes any device or other apparatus which emits electromagnetic radiation by laser action, i.e. by stimulated emission of electromagnetic radiation. The term is intended to include masers or other nonvisible-light lasers; the wavelength of the electromagnetic radiation will normally be chosen according to the heating requirements of the materials to be sintered and/or according to the sizes of the particles or the resultant granules. Particularly preferred lasers are those which emit infrared or microwave radiation. An especially preferred laser is a CO₂ laser, which emits electromagnetic radiation at a wavelength of 10.6 µm (i.e. in the infrared region of the spectrum). Additionally or alternatively, one or more diode lasers may be used, e.g. an array of a plurality of diode lasers. A preferred diode laser has a wavelength of approximately 1.0 µm.

The laser, or array of lasers, preferably has a maximum power output of at least 1 kW, more preferably at least 2 kW, even more preferably at least 4 kW, especially at least approximately 6 kW. The laser beam is preferably focussed (but in some embodiments an unfocussed laser beam may be used). The laser beam is preferably focussed within the depth of powder particles being sintered, more preferably substantially in the centre of the depth. For example, if the powder particles have a depth of approximately 10 mm, the laser is preferably focussed at a depth of approximately 5 mm within the powder particles.

In preferred embodiments of the invention, the laser is substantially stationary, i.e. the particles to be sintered are arranged to move with respect to a fixed laser. More particularly, the beam of electromagnetic radiation emitted by the laser is preferably substantially stationary (i.e. preferably neither the laser itself nor the laser beam, is moved). Although this latter arrangement is preferred, it is possible, in alternative arrangements, for the beam of radiation emitted from the laser to be moved, for example by moving the laser and/or by the use of moving reflectors. In this way, the laser beam may "scan" the particles to be sintered, for example. It is also possible for the particles and the laser and/or laser beam to be moved. In the interests of efficiency, however, an arrangement in which the particles are moved relative to a stationary laser and laser beam are normally preferred.

In particularly preferred embodiments of the invention, there is a support body which supports the particles during at least part of (preferably the whole of) the predetermined duration of the laser radiation impingement on the particles being sintered. The support body preferably includes at least one groove in which the powder particles being heated by the laser beam are contained. The shape and depth of the groove will normally be chosen according to the size of the particles being sintered and the size of the granules to be formed by the sintering. The groove preferably has a depth of at least 2 mm, more preferably at least 4 mm, even more preferably at least 8 mm, for example approximately 10 mm. The groove may be substantially square or rectangular in cross-section, but other cross-sectional shapes are possible, for example substantially U-shaped or V-shaped.

The support body preferably moves with respect to the laser beam, thereby causing or assisting the powder particles to move with respect to the laser beam; i.e. the moving support body preferably carries the particles through the laser beam. For example, the support body may comprise a conveyor belt or a system of rollers, for example. More preferably, however, the support body rotates with respect to the laser beam. The speed of rotation is preferably at least 5 rpm (revolutions per minute), more preferably at least 8 rpm, even more preferably at least 10 rpm, e.g. 15 or 20 rpm. Preferably the speed of rotation is no greater than 100 rpm, more preferably no greater than 50 rpm, especially no greater than 30 rpm. The support body preferably rotates about an axis which is substantially perpendicular to the laser beam. Advantageously, the support body may be generally in the form of a wheel.

The powder particles are preferably supplied to the laser beam by means of a chute. For embodiments in which there is a support body, the chute preferably supplies the powder particles to the support body. There will normally be a hopper or other source of the powder particles in communication with the top of the chute.

In embodiments of the invention in which a support body for the particles does not move, the particles may move with respect to the support, for example they may be guided by the support. The particles may, for example, move under gravity, preferably on an inclined support, or they may be blown by pressurized gas.

In some embodiments of the invention, the movement of the particles to be sintered may be discontinuous rather than continuous. For example, the particles may be moved into position in the laser beam and then held substantially stationary (or at least significantly slowed down) for a predetermined duration while the radiation emitted from the laser heats them and causes them to sinter, before being moved out of the laser beam when the desired amount of sintering has occurred. The inventors of the present invention have found, however, that such a discontinuous operation is often unnecessary. The inventors have found that, advantageously, a process in which the particles to be sintered are moved continuously may produce entirely satisfactory results; for example, such a process may produce discrete sintered granules, despite the continuous nature of the process. In such continuous processes, there is relative movement between the particles being heated by the electromagnetic radiation and the laser beam during the predetermined duration of impingement of electromagnetic radiation upon the particles.

In order to produce discrete granules of sintered particles from a process in which the particles are moved continuously, one method is to cause the radiation to be emitted from the laser in a series of discrete pulses. This has the effect of simulating a discontinuous particle supply process, but in a much simpler and more efficient manner. The duration of the laser pulses, and the intervals between the pulses, together with the speed with which the particles move with respect to the laser beam, may be selected (e.g. by trial and error) so as to produce discrete granules of the desired size. Preferably, however, the laser pulses have a duration of at least 1 µs, more preferably at least 5 µs. The maximum duration of the laser pulses is preferably no greater than 1 ms, more preferably no greater than 100 µs, especially no greater than 50 µs, e.g. approximately 10-20 µs. The intervals between the laser pulses are preferably of substantially the same duration as the pulses themselves.

Ingeniously, however, the present inventors have devised a process, according to preferred embodiments of the invention, in which both continuous particle supply and continuous emission of the laser radiation can produce discrete granules of sintered particles. Advantageously, the movement of the support body with respect to the laser beam may cause or assist in the formation of discrete granules from the heated powder particles, since the movement of the support body may cause agglomerations of the powder particles to become separated from each other as they move away from the laser beam. The movement of the heated powder particles away from the laser beam can be particularly effective in producing discrete granules if the particles are accelerated away from the laser beam, because this will tend to cause the required separation. Such an acceleration may, for example, be provided at least in part by gravity, i.e. the particles may be allowed to fall under gravity (with or without additional velocity or acceleration provided by the support body) subsequent to being heated by the laser beam.

In some preferred embodiments of the invention, subsequent to the powder particles being heated by the laser beam, they are allowed at least partially to cool in air or another fluid substantially without contacting any solid objects. This may conveniently be achieved by allowing the heated particles to fall a distance through the air after being heated by the laser beam. Additionally or alternatively, the heated particles may be quenched in a liquid, e.g. water, subsequent to being heated.

As mentioned previously, the powder particles may, for example, be formed at least partly from one or more of: metallic, semi-metallic, ceramic, cermet, or other inorganic materials. It is particularly preferred for the powder particles comprise an inoculant (e.g. a ferrosilicon-based inoculant, especially one containing 60-80% silicon by weight), a flux, or other metallurgical additive. Examples of suitable materials include: calcium, magnesium, zirconium, magnesium fluoride, silicon fluoride, and iron alloys.

The invention will now be described, by way of example, with reference to the accompanying drawing.

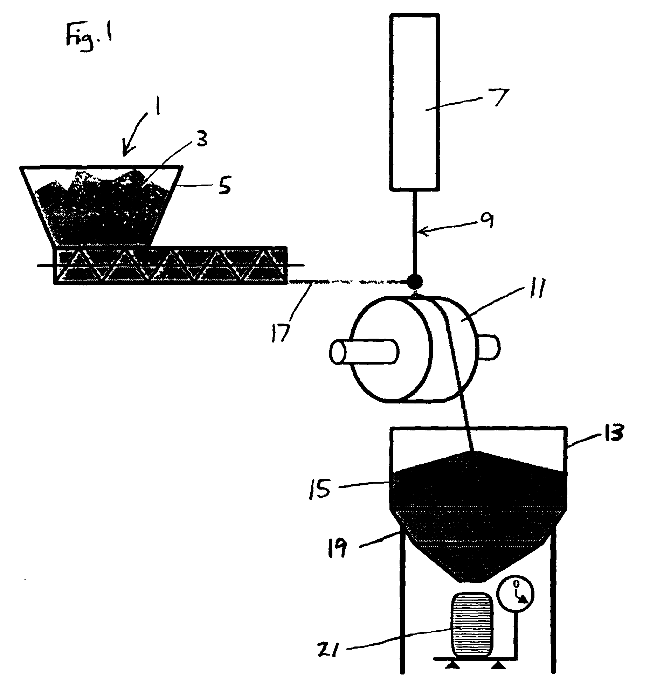

Figure 1 is a schematic representation of a preferred process and apparatus according to the invention. The apparatus comprises a supply 1 of powder particles 3, the supply including a hopper 5 containing the powder particles. The apparatus also includes a laser 7, the laser emitting a laser beam 9 of electromagnetic radiation to heat an sinter the powder particles 3. A support body 11 in the form of a rotatable wheel is also provided, as is a receptacle 13 for granules 15 which are formed by the laser sintering of the powder particles 3. The support body wheel 11 has a circumferential groove (not shown) which carries the powder particles 3 which are supplied to the wheel.

The process is as follows. A stream 17 of powder particles 3 is supplied to the top of the support body wheel 11 (in the groove), which is spinning at approximately 10 rpm. (The stream of powder particles will normally be supplied to the spinning wheel down a chute from the hopper 5. No chute is shown in the drawing; the supply of powder particles is merely represented schematically.) The laser 7, which is a CO₂ laser, emits a continuous beam 9 of infrared electromagnetic radiation at wavelength of 10.6 µm and at a power of approximately 6 kW. The laser beam 9 is focussed at or near the top of the spinning support body wheel 11 and the powder particles 3 supplied to the wheel pass through the beam and are heated by it such that they soften and fuse with adjacent particles, i.e. they become sintered.

The heated powder particles, which have been heated and which are at least beginning to fuse with neighbouring particles, are thrown from the spinning wheel 11 and are allowed to fall through the air into the receptacle 13. The heated and partially fused particles 3 are accelerated away from the spinning wheel, partly due to the momentum imparted to them by the rotation of the wheel, and partly due to the action of gravity as the particles fall from the wheel to the receptacle. This causes (or at least assists in) the separation of the fusing particles into discrete granules as the particles leave the spinning wheel. Before the particles reach the receptacle, they have cooled sufficiently to ensure that they remain as discrete granules and do not fuse further.

The receptacle 13 contains a sieve 19 and the granules 15 of the required maximum size which pass through the sieve are poured into packaging 21 for distribution.

## Claims

1. A process of sintering powder particles into granules, comprising:
(a) providing a laser to emit a beam of electromagnetic radiation to heat the powder particles;
(b) providing a supply of powder particles to be sintered; and
(c) causing relative movement between the powder particles and the laser beam such that each particle is subjected to heating by the laser beam for a predetermined duration and the heated particles are thereby sintered to form a plurality of granules.

2. A process according to Claim 1, in which the laser is substantially stationary.

3. A process according to any preceding claim, in which the powder particles move with respect to a substantially stationary laser beam.

4. A process according to any preceding claim, in which there is relative movement between the powder particles being heated by the laser beam and the laser beam during at least part of the predetermined duration.

5. A process according to any preceding claim, in which the beam of electromagnetic radiation is emitted by the laser in a series of pulses.

6. A process according to any preceding claim, further comprising a support body which supports the powder particles during at least part of the predetermined duration.

7. A process according to Claim 6, in which the support body includes at least one groove in which the powder particles being heated by the laser beam are contained.

8. A process according to Claim 6 or Claim 7, in which the support body moves with respect to the laser beam, thereby causing or assisting the powder particles to move with respect to the laser beam.

9. A process according to Claim 8, in which the support body rotates with respect to the laser beam.

10. A process according to Claim 9, in which the support body rotates about an axis which is substantially perpendicular to the laser beam.

11. A process according to any one of claims 8 to 10, in which the movement of the support body with respect to the laser beam causes or assists in the formation of discrete granules from the heated powder particles.

12. A process according to any preceding claim, in which, subsequent to the powder particles being heated by the laser beam, they are accelerated away from the laser beam, thereby assisting or causing the formation of discrete granules from the heated powder particles.

13. A process according to Claim 12, in which said acceleration is at least in part due to gravity.

14. A process according to any preceding claim, in which, subsequent to the powder particles being heated by the laser beam, they are allowed at least partially to cool in air or another fluid substantially without contacting any solid objects.

15. A process according to any preceding claim, in which the powder particles are formed at least partly from one or more of: metallic, semi-metallic, ceramic, cermet, or other inorganic materials.

16. A process according to Claim 15, in which the powder particles comprise an inoculant, a flux, or other metallurgical additive.

17. A process according to any preceding claim, in which the powder particles are supplied to the laser beam by means of a chute.

18. A plurality of granules produced by a process according to any preceding claim.

19. A method of combining two or more different solid materials, comprising providing a mixture of powder particles of two or more different materials, and sintering the powder particles into granules in a process according to any one of claims 1 to 17, such that the granules each comprise a combination of the different materials.

20. A method according to Claim 19, in which at least one of the materials is a metal, and the method comprises a method of making an alloy.

21. An apparatus for sintering powder particles into granules, comprising:
(a) a laser to emit a beam of electromagnetic radiation to heat the particles;
(b) a support body to support the powder particles as they are heated by the laser beam; and
(c) means for causing relative movement between the powder particles and the laser beam such that each particle may be subjected to heating by the laser beam for a predetermined duration and the heated particles may thereby be sintered to form a plurality of granules.

22. An apparatus according to Claim 21, in which the laser is fixed in a substantially stationary position during use.

23. An apparatus according to Claim 21 or Claim 22, in which the apparatus includes means to cause the powder particles to move with respect to the laser.

24. An apparatus according to Claim 23, in which said means comprises the support body, the support body being arranged to move with respect to the laser.

25. An apparatus according to Claim 24, in which the support body is rotatable with respect to the laser.

26. An apparatus according to Claim 25, in which the support body is rotatable about an axis which is substantially perpendicular to the beam of electromagnetic radiation emitted by the laser.

27. An apparatus according to any one of claims 21 to 26, further comprising a chute for supplying powder particles to be sintered, to the laser beam, the chute preferably arranged to cause or assist the powder particles to move with respect to the laser.
